# EUROPÄISCHE PATENTSCHRIFT

(11) **EP 2 788 207 B1**
(45) Veröffentlichungstag und Bekanntmachung des Hinweises auf die Patenterteilung: **06.06.2018**
(21) Anmeldenummer: 12795405.5
(22) Anmeldetag: 27.11.2012
(51) Int. Cl.: B60G 7/00, B60G 21/055

(54) **ACHSE EINES ZWEISPURIGEN FAHRZEUGS MIT EINEM LÄNGSLENKER**
VEHICLE SUSPENSION WITH A TRAILING ARM
SUSPENSION DE VEHICULE AVEC UN BRAS TIRÉ

(30) Priorität: 09.12.2011 DE 102011088178
(43) Veröffentlichungstag der Anmeldung: 15.10.2014
(73) Patentinhaber: Bayerische Motoren Werke Aktiengesellschaft, 80809 München (DE)
(72) Erfinder: DURKOVIC, Martin, 80809 München (DE)
(86) Internationale Anmeldenummer: PCT/EP2012/073753
(87) Internationale Veröffentlichungsnummer: WO 2013/083440

(56) Entgegenhaltungen:
- DE-A1- 1 903 640
- DE-A1- 4 411 285
- DE-A1-102004 005 811
- DE-A1-102004 020 073
- FR-A1- 2 645 800
- US-A- 4 632 422
- US-A- 5 549 320

## Beschreibung

Die Erfindung betrifft eine Achse für Räder eines zweispurigen Fahrzeugs, insbesondere eines zweispurigen Kraftfahrzeugs, mit einer einen Radträger führenden, aufgelösten unteren Lenkerebene, die durch einen Querlenker sowie einen Längslenker gebildet ist, sowie mit einem Drehstabstabilisator, der um eine im wesentlichen in Fahrzeug-Querrichtung verlaufende Drehachse verdrehbar und mit seinem Endbereich über eine drehmomentenübertragende Verbindung mit dem vom Radträger abgewandten Endbereich des Längslenkers verbunden ist.

Derartige Achsen werden als so genannte Zweigelenk-Federbeinachse oder Doppelquerlenkerachse ausgeführt und insbesondere bei Kraftfahrzeugen in Gestalt von Personenkraftwagen verbaut. Die Achse bildet in der Regel die Vorderachse bzw. Lenkachse mit lenkbaren Rädern des jeweiligen Fahrzeugs. Die Achse ist an ihrer unteren Lenkerebene mit einem sich im Wesentlichen quer zur Hauptfahrtrichtung erstreckenden Querlenker zum Aufnehmen und Überleiten hauptsächlich der Querkräfte der Räder an die Karosserie des Fahrzeugs gestaltet. Ferner ist an der unteren Lenkerebene ein Längslenker, auch als Zugstrebe bezeichnet, vorgesehen, der sich in der Regel schräg zur Hauptfahrtrichtung erstreckt und dazu dient im Wesentlichen die Radlängskräfte aufzunehmen.

An solchen Achsen ist ferner ein Drehstabstabilisator vorgesehen, der die beiden Spurseiten der Achse miteinander verbindet und zum Reduzieren der Wankneigung des Fahrzeugs dient. Der Drehstabstabilisator ist dazu in der Regel zumeist am Radträger abgestützt. Bei bekannten Zweigelenk-Federbeinachsen kann der Drehstabstabilisator auch an dessen Federbein abgestützt sein. Das Abstützen erfolgt dabei üblicherweise über eine am Radträger angelenkte Pendelstütze, die ferner an einem Ende eines abgebogenen Endabschnitts des Drehstabstabilisators befestigt ist. Der Drehstabstabilisator ist ferner in der Regel mit seinem Querstab selbst an zwei Halterungen bzw. Abstützungen direkt oder indirekt am Fahrzeugaufbau abgestützt.

Aus DE 102004020073 A1 ist eine Zweigelenk-Federbeinachse oder Doppelquerlenkerachse bekannt, bei der das dem Radträger abgewandte Ende des im wesentlichen Rad-Längskräfte aufnehmenden Längslenkers über ein Drehgelenk, dessen Drehachse winkelig zur Drehachse des Drehstabstabilisators verläuft, mit dem zugewandten freien Ende des Drehstabstabilisators verbunden ist.

Die DE 44 11 285 A1 zeigt eine Einzelradaufhängung für Kraftfahrzeuge mit zwei einzelnen Streben, die jeweils an einem Ende gelenkig mit einem Radträger verbunden sind, während sie an ihrem anderen Ende gelenkig mit der Karosserie verbunden sind, wobei eine der beiden Streben eine Verlängerung in Richtung der Längsmittelachse des Fahrzeuges von dem Gelenk aufweist, an deren Ende in einer weiteren Lagerstelle ein Stabilisator gelagert ist. Dabei weist die Lagerstelle eine Außenhülse auf, in der eine Gummi- bzw. Elastomereinheit und ein Lagerkern (20) enthalten sind.

Der vorliegenden Erfindung liegt die Aufgabe zu Grunde, eine solche bauraumsparende Achse für Räder eines zweispurigen Fahrzeugs zu schaffen, die ein verbessertes Einfederungsverhalten zeigt.
Die Aufgabe ist erfindungsgemäß für eine Achse nach dem Oberbegriff des Anspruchs 1 dadurch gekennzeichnet, dass die besagte Hebelabstützung an dem Längslenker mit mindestens einem Kugelgelenk mit einer Kugelbuchse gestaltet ist.

Mit der derartigen erfindungsgemäßen Hebelabstützung ist auf besonders einfach herzustellende und zugleich sehr betriebssichere Weise nicht nur eine drehmomentenübertragende Kopplung zwischen dem Drehstabstabilisator und dem Längslenker hergestellt, womit die im üblichen Stand der Technik erforderliche Pendelstütze und somit deren Bauraumbedarf entfallen kann, sondern es ist mit einer Hebelabstützung mit mindestens einem Kugelgelenk mit einer Kugelbuchse eine bestmöglich darstellbare Relativbewegung des Drehstabstabilisators zum Längslenker möglich, und zwar insbesondere in Form einer Torsionsbewegung des Drehstabilisators, welcher dieser zur Erfüllung seiner Funktion ausführt. Diese Relativbewegung erlaubt es, ansonsten zwischen den Bauteilen auftretende Zug- oder Druckspannungen abzubauen und eine ansonsten weitgehend freie und nur durch die gewünschten kinematischen Zwänge geführte Bewegung der beteiligten Bauteile zu erreichen. Dabei kann der Längslenker, sofern dies gewünscht ist, hinsichtlich seiner konstruktiven Gestaltung, Auslegung und Ankopplung zur Fahrzeugkarosserie in weitgehend herkömmlicher Art und Weise ausgeführt sein. Dies ist insbesondere im Hinblick auf die restliche Gestaltung der erfindungsgemäßen Achse insbesondere im Bereich des Radträgers interessant. Es ist somit nämlich möglich, die erfindungsgemäße Verbindung auch ohne größere sonstige Änderungen an der zugehörigen Achse bereitzustellen.

Die Hebelabstützung ist ferner bevorzugt an dem Längslenker mit zwei Kugelgelenken mit je einer Kugelbuchse gestaltet, von denen eine am Längslenker relativ zu diesem ortsfest angeordnet ist. Mit dem ortsfest am Längslenker angebrachten Kugelgelenk ist eine gewisse Positionierung des Drehstabstabilisators relativ zum Längslenker und damit relativ zum restlichen Fahrzeug gewährleistet. Diese Positionierung und räumliche Festlegung gestattet es, die Anzahl restlicher Abstützungen für den Drehstabstabilisator zu verringern. Das zweite Kugelgelenk an dem erfindungsgemäßen Längslenker ist vorzugsweise als ein Loslager mit einer am Längslenker verschiebbar angeordneten Kugelbuchse gestaltet. Mit dem derartigen Festlager und Loslager der Hebelabstützung am Längslenker ist der zugehörige Drehstabstabilisator statisch bestimmt gehaltert.

In der mindestens einen Kugelbuchse ist vorzugsweise eine Kugel gelagert, die am Drehstabstabilisator relativ zu diesem verschiebbar angeordnet ist bzw. durch die der Drehstabilisator zumindest geringfügig verschiebbar hindurch geführt ist. An der Kugel im Kugelgelenk ist also eine gewisse Verschiebung des Drehstabstabilisators möglich. Diese begrenzte Verschiebbarkeit führt zu einer definierten Bewegungsfreiheit einerseits und zu der statisch und dynamisch erforderlichen Führung des Drehstabstabilisators andererseits.

In der Kugelbuchse ist vorzugsweise eine schlitzförmige Öffnung ausgebildet, in der die Kugel eingeschoben und nachfolgend gedreht gehalten ist. Die Kugel ist bei dieser Ausgestaltung aufgrund des durch sie im verbauten Zustand hindurch geführten Drehstabstabilisators mit einer zentralen Durchgangsbohrung versehen. Diese Bohrung führt dazu, dass die Kugel an zwei gegenüberliegenden Seiten abgeflacht ist. Die derartigen Abflachungen ermöglichen es, die Kugel in eine schlitzförmige Kugelbuchse derart einzuschieben, dass sie danach in der Kugelbuchse gedreht werden kann. Die gedrehte Kugel ist dann mit ihren ansonsten im Durchmesser größeren Abschnitten in der Kugelbuchse sicher zurückgehalten. Durch die derart gelagerte Kugel wird durch deren Durchgangsbohrung der Drehstabstabilisator hindurchgeführt und auf diese Weise in der Kugel in zwei Freiheitsgraden schwenkbar gelagert.

Der Längslenker ist ferner bevorzugt mit einem Schwenkgelenk zum schwenkbaren Haltern an einer zugehörigen Fahrzeugkarosserie gestaltet. Das Schwenkgelenk kann dabei im Wesentlichen in herkömmlicher Weise ausgestaltet sein. Somit können bekannte Stützstrukturen mit ihrer erprobten Kinematik auch bei der erfindungsgemäßen Achse zur Anwendung kommen.

Das Schwenkgelenk ist dabei besonders bevorzugt mit einem dessen Schwenkachse umgebenden Dämpfungskörper gestaltet. Derartige Dämpfungskörper sind bei bekannten Achsen in Form einer Elastomerhülse bekannt. Die Elastomerhülse kann vorteilhaft an ihrem Umfang einen oder mehrere Bereiche erhöhter Festigkeit aufweisen, so dass mit diesen versteiften Bereichen eine Art Schwenkachse definiert wird.

Die Hebelabstützung ist vorzugsweise mit einem den Dämpfungskörper zumindest abschnittsweise umgreifenden Hebelabschnitt gestaltet. Der Hebelabschnitt greift damit unmittelbar im Anlenkbereich des Längslenkers an diesem an, was im Hinblick auf die bei der Übertragung der Drehmomente zwischen dem Drehstabstabilisator und dem Längslenker entstehenden Ausgleichsbewegungen besonders von Vorteil ist. Ferner kann mit dieser Gestaltung insgesamt eine sehr kleine und damit bauraumsparende Anordnung erzielt werden.

Der Hebelabschnitt ist ferner vorteilhaft im Wesentlichen halbkreisförmig als Abschnitt des Drehstabstabilisators gestaltet. Eine solche Halbkreisform kann an dem in der Regel insgesamt stabförmigen und aus einem Vollmaterial hergestellten Drehstabstabilisator vorteilhaft mit ausgebildet werden. Der Drehstabstabilisator kann zusammen mit seinem Hebelabschnitt also einteilig ausgebildet sein.

Im Übrigen ist der Drehstabstabilisator vorzugsweise im Wesentlichen nur noch mittig mit einer Abstützung zum Begrenzen einer Bewegung in Fahrzeugquerrichtung an einer zugehörigen Fahrzeugkarosserie gelagert. Es kann damit auf zwei ansonsten übliche und nur eine Torsion des Drehstabilisators erlaubende Abstützungen verzichtet werden. Die eine Abstützung kann direkt an der Fahrzeugkarosserie erfolgen oder indirekt z.B. über einen Achsträger.

Nachfolgend wird ein Ausführungsbeispiel der erfindungsgemäßen Lösung anhand der beigefügten schematischen Zeichnungen näher erläutert. Es zeigt:
- Fig. 1: eine perspektivische Ansicht einer Achse gemäß dem Stand der Technik,
- Fig. 2: die Ansicht II gemäß Fig. 1,
- Fig. 3: die Ansicht III gemäß Fig. 1,
- Fig. 4: eine perspektivische Ansicht eines Längslenkers und des Drehstabstabilisators der Achse gemäß Fig. 1,
- Fig. 5: eine perspektivische Ansicht eines Ausführungsbeispiels einer erfindungsgemäßen Achse,
- Fig. 6: eine perspektivische Ansicht eines Längslenkers und des Drehstabstabilisators der Achse gemäß Fig. 5,
- Fig. 7: eine Detailansicht der Verbindung von Längslenker und Drehstabstabilisator gemäß Fig. 6,
- Fig. 8: die Ansicht VIII gemäß Fig. 7,
- Fig. 9: die Ansicht IX gemäß Fig. 7,
- Fig. 10: die Ansicht X gemäß Fig. 7,
- Fig. 11: eine perspektivische Ansicht von Schritten der Montage eines Kugelgelenks der Verbindung gemäß Fig. 7 und
- Fig. 12: eine perspektivische Ansicht einer Abstützung des Drehstabstabilisators gemäß Fig. 7.

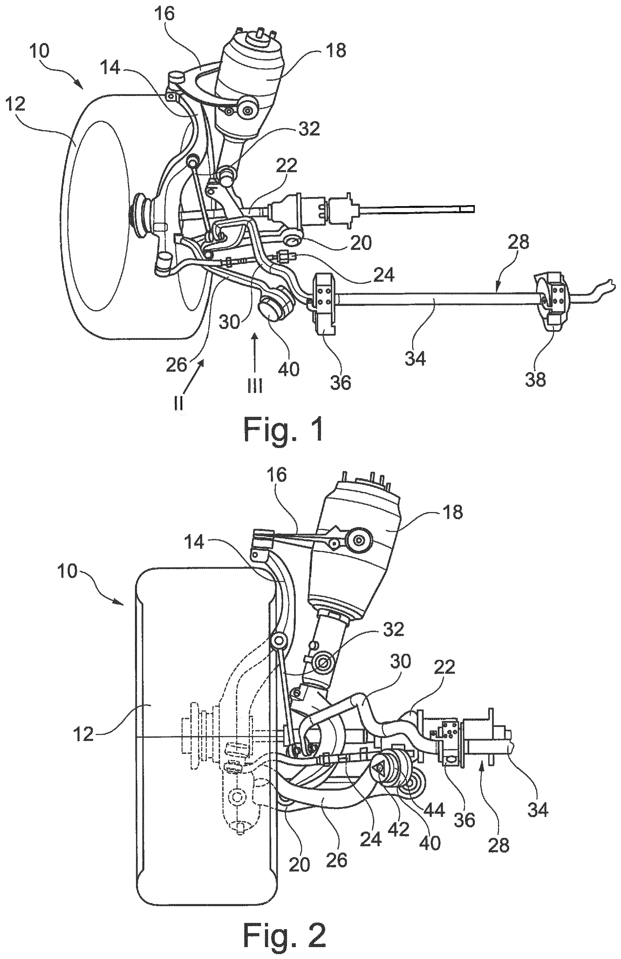

In den Fig. 1 bis 4 ist eine als antreibbare Vorderachse bzw. Lenkachse eines Kraftfahrzeugs gestaltete Achse 10 gemäß dem Stand der Technik veranschaulicht, bei der ein Rad 12 an einem Radträger 14 drehbar gelagert ist. Der Radträger 14 ist mit einem doppelarmigen oberen Querlenker 16 sowie mit einem Federbein 18 und mit einem unteren Querlenker 20 an einer weiter nicht veranschaulichten Fahrzeugkarosserie eines zugehörigen Fahrzeugs angelenkt. Eine Spurstange 24 bestimmt den Spurwinkel des Radträgers 14 bzw. Rades 12 und es führt eine Antriebswelle 22 zu dem am Radträger 14 drehbaren Rad 12.

Im unteren Bereich des Radträgers 14, der so genannten unteren Lenkerebene ist neben dem unteren Querlenker 20 und der Spurstange 24 an der Achse 10 noch ein schräg zur Hauptfahrtrichtung ausgerichteter Längslenker 26 angeordnet. Der Längslenker 26 bildet insbesondere eine Zugstrebe zum Aufnehmen der während der Fahrt am Rad wirkenden Zugkräfte.

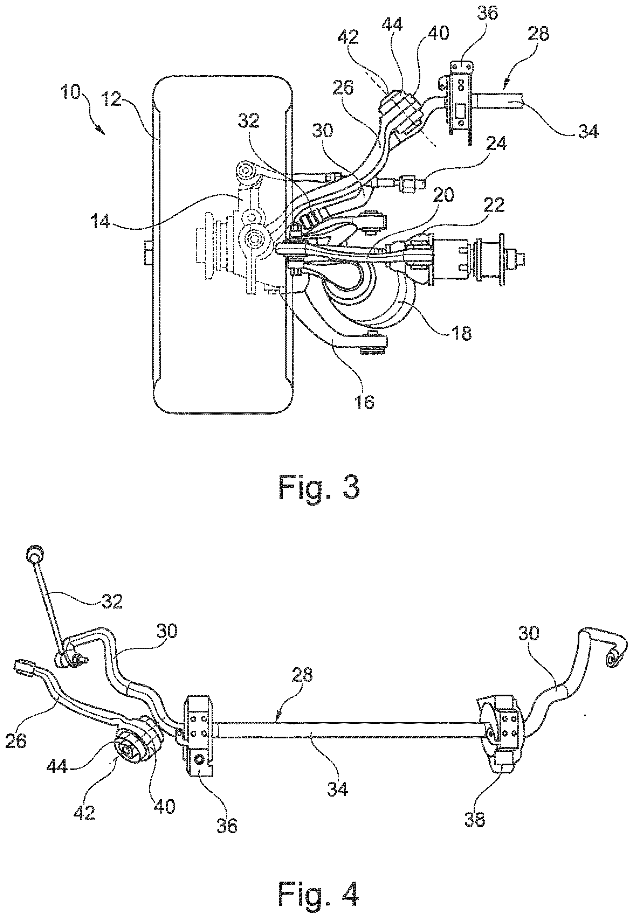

Ferner ist an der Achse 10 ein stabförmiger, aus Federstahl hergestellter Drehstabstabilisator 28 vorgesehen, der an seinen beiden Seiten je einen abgebogenen Endabschnitt 30 aufweist. Diese Endabschnitte 30 sind jeweils mittels einer Pendelstütze 32 am Radträger 14 angelenkt. Ein als Querstab 34 ausgebildeter Mittelbereich des Drehstabstabilisators 28 ist mittels einer ersten Abstützung 36 und einer zweiten Abstützung 38, welche die Position des Drehstabilisators in Fahrzeug-Längsrichtung und Fahrzeug-Hochrichtung festlegen, an der Fahrzeugkarosserie schwenkbar bzw. tordierbar abgestützt. Dies ist insbesondere in Fig. 4 dargestellt. Der Drehstabstabilisator 28 verbindet auf diese Weise die beiden Spurseiten der Achse 10 miteinander und reduziert damit die Wankneigung des zugehörigen Fahrzeugs insbesondere bei Kurvenfahrt.

Der Längslenker 26 ist bei dieser Achse 10 gemäß dem Stand der Technik in klassischer Weise an der Fahrzeugkarosserie mittels eines Schwenkgelenks 40 angelenkt und um eine im Wesentlichen sich horizontal und schräg zur Fahrzeuglängsrichtung erstreckende Schwenkachse 42 schwenkbar. Die Schwenkachse 42 ist dabei von einem Dämpfungskörper 44 in Gestalt einer Elastomerhülse umgeben.

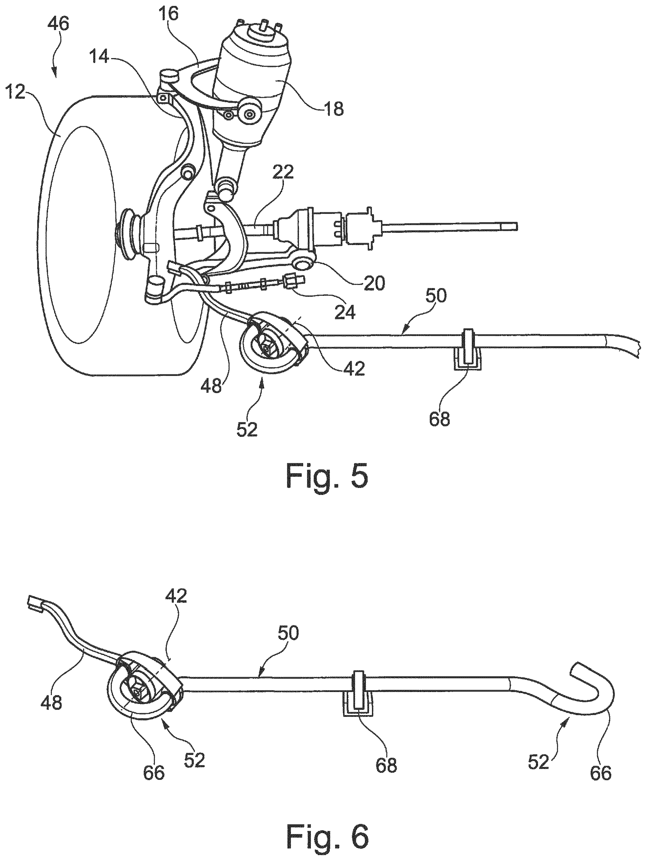

In den Fig. 5 bis 12 ist eine Achse 46 für lenkbare Räder 12 gemäß der Erfindung dargestellt. Die Achse 46 entspricht hinsichtlich der Komponenten 12, 14, 16, 18, 20, 22 und 24 im Wesentlichen der Achse 10 gemäß dem Stand der Technik.

Im Gegensatz zu der bekannten Achse 10 ist bei der Achse 46 hingegen eine Verbindung zwischen einem dortigen Längslenker 48 und einem dortigen Drehstabstabilisator 50 vorgesehen. Die Verbindung ist mittels einer Hebelabstützung 52 des Drehstabstabilisators 50 an dem Längslenker 48 gestaltet und es ist auf diese Weise eine drehmomentübertragende Kopplung zwischen dem Drehstabstabilisator 50 und dem Längslenker 48 hergestellt.

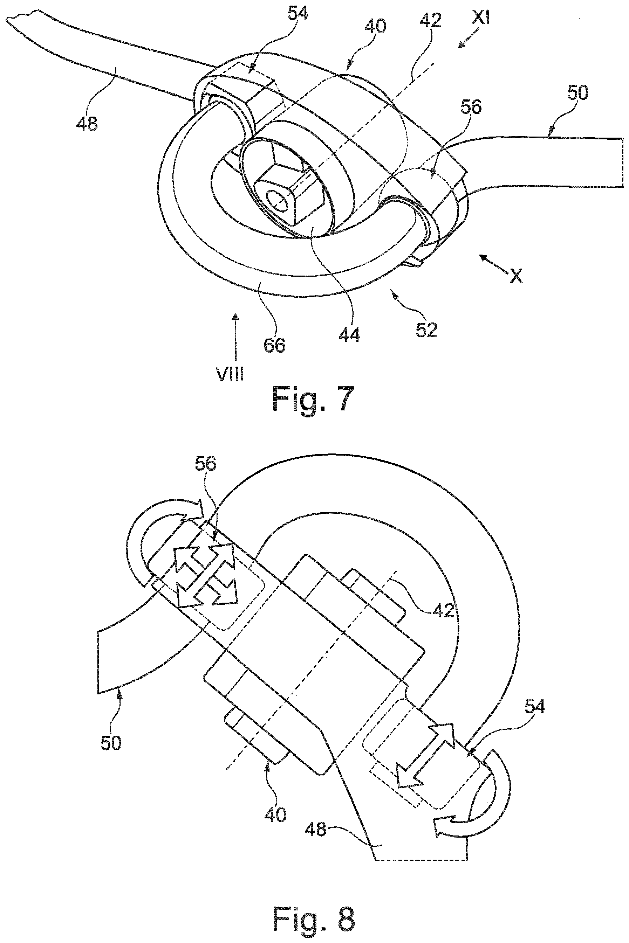

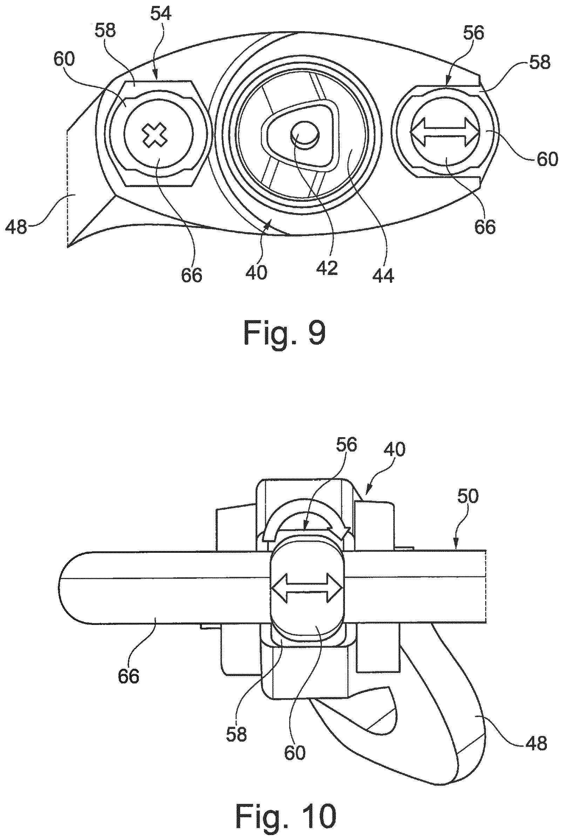

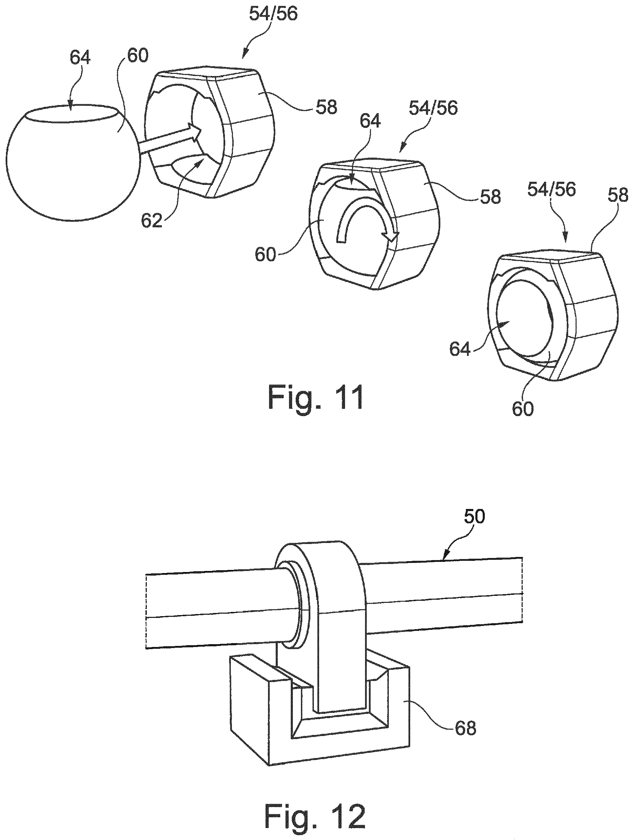

Die Hebelabstützung 52 ist mit zwei Kugelgelenken 54 und 56 gestaltet, mit denen der Drehstabstabilisator 50 sich am Längslenker 48 abgestützt. Jedes Kugelgelenk 54 bzw. 56 weist eine Kugelbuchse 58 auf, in der eine Kugel 60 an einer schlitzförmigen Öffnung 62 eingeführt wird, die nachfolgend geeignet gedreht gehalten ist (siehe Fig. 11), derart, dass in die Kugeln 60 an je einer dortigen Durchgangsbohrung 64 ein das Schwenkgelenk 40 halbkreisförmig umgreifender Hebelabschnitt 66 des Drehstabstabilisators 50 eingeschoben werden kann bzw. eingeschoben ist. Das Kugelgelenk 54 bildet dabei ein vormontiertes Festlager, dessen Kugelbuchse 58 an dem Längslenker 48 nicht zur Radialrichtung der Durchgangsbohrung 64 verschiebbar ist. Im Gegensatz dazu bildet das Kugelgelenk 56 mit einer gegenüber dem Längslenker 48 in im Einbauzustand im wesentlichen horizontaler Radialrichtung der Kugel 60 verschiebbaren Kugelbuchse 58 ein Loslager. Im Rahmen der Vormontage des linksseitigen und rechtsseitigen Längslenkers 48 am Drehstabilisator 50 wird somit zunächst eine Verbindung im Festlager (Kugelgelenk 54) hergestellt, wonach das Loslager in Form des Kugelgelenks 56 mit dem Längslenker verbunden wird. Der in Fig. 9 im Kugelgelenk 56 dargestellte Pfeil sowie der in Figur 8 im Kugelgelenk 56 dargestellte und senkrecht zur Schwenkachse 42 orientierte Pfeil verdeutlichen diesen Freiheitsgrad des Loslagers.

Mit den derartigen Kugelgelenken 54 und 56 ist eine gewisse Relativbewegung des Hebelabschnitts 66 des Drehstabstabilisators 50 zum Längslenker 48 möglich. Zugleich überträgt der Hebelabschnitt 66 ein aus der Funktion des Drehstabilisators resultierendes Drehmoment vom Drehstabstabilisator 50 zum Längslenker 48 und umgekehrt.

Die Relativbewegung ergibt sich beim Übertragen dieser Drehmomente, einem damit verbundenen Schwenken des Längslenkers 48 an der Schwenkachse 42 sowie ferner durch eine Dämpfungsbewegung am Dämpfungskörper 44 der Achse 46 (siehe Fig. 8, 9 und 10). Die Relativbewegung ermöglicht, dass ansonsten zwischen den Bauteilen auftretende Zug- oder Druckspannungen abgebaut werden.

Im Übrigen kann der Drehstabstabilisator 50 bezogen auf die Fahrzeug-Querrichtung lediglich mittig mit einer Abstützung 68 an einer zugehörigen Fahrzeugkarosserie um eine im wesentlichen in Fahrzeug-Querrichtung verlaufende Drehachse schwenkbar gelagert sein, wobei diese Abstützung wie in Fig.12 dargestellt einen Freiheitsgrad in Fahrzeug-Längsrichtung aufweisen kann.

## Patentansprüche

1. Achse (46) für Räder (12) eines zweispurigen Kraftfahrzeugs, mit einer einen Radträger (14) führenden, aufgelösten unteren Lenkerebene, die durch einen Querlenker (20) und einen Längslenker (48) gebildet ist, sowie mit einem Drehstabstabilisator (50), der um eine im wesentlichen in Fahrzeug-Querrichtung verlaufende Drehachse verdrehbar und mit seinem Endbereich über eine drehmomentenübertragende Verbindung mit dem vom Radträger (14) abgewandten Endbereich des Längslenkers (48) verbunden ist, wobei die Verbindung mit einer Hebelabstützung (52) des Drehstabstabilisators (50) an dem Längslenker (48) hergestellt ist,
**dadurch gekennzeichnet, dass** die Hebelabstützung (52) an dem Längslenker (48) mit mindestens einem Kugelgelenk (54, 56) mit einer Kugelbuchse (58) gestaltet ist.

2. Achse nach Anspruch 1,
**dadurch gekennzeichnet, dass** die Hebelabstützung (52) an dem Längslenker (48) mit zwei Kugelgelenken (54, 56) mit je einer Kugelbuchse (58) gestaltet ist, von denen eine am Längslenker (48) relativ zu diesem ortsfest angeordnet ist.

3. Achse nach Anspruch 1 oder 2,
**dadurch gekennzeichnet, dass** in der mindestens einen Kugelbuchse (58) eine Kugel (60) gelagert ist, die am Drehstabstabilisator (50) relativ zu diesem verschiebbar angeordnet ist.

4. Achse nach Anspruch 3,
**dadurch gekennzeichnet, dass** in der Kugelbuchse (58) eine schlitzförmige Öffnung (62) ausgebildet ist, in der die Kugel (60) eingeschoben und nachfolgend gedreht gehalten ist.

5. Achse nach einem der Ansprüche 1 bis 4,
**dadurch gekennzeichnet, dass** der Längslenker (48) mit einem Schwenkgelenk (40) zum schwenkbaren Haltern an einer zugehörigen Fahrzeugkarosserie gestaltet ist.

6. Achse nach Anspruch 5,
**dadurch gekennzeichnet, dass** das Schwenkgelenk (40) mit einem dessen Schwenkachse (42) umgebenden Dämpfungskörper (44) gestaltet ist.

7. Achse nach Anspruch 6,
**dadurch gekennzeichnet, dass** die Hebelabstützung (52) mit einem den Dämpfungskörper (44) zumindest abschnittsweise umgreifenden Hebelabschnitt (66) gestaltet ist.

8. Achse nach Anspruch 7,
**dadurch gekennzeichnet, dass** der Hebelabschnitt (66) im Wesentlichen halbkreisförmig als Abschnitt des Drehstabstabilisators (50) gestaltet ist.

9. Achse nach einem der Ansprüche 1 bis 8,
**dadurch gekennzeichnet, dass** der Drehstabstabilisator (50) im Wesentlichen mittig mit einer Abstützung (68) an einer zugehörigen Fahrzeugkarosserie gelagert ist.

## Claims

1. An axle (46) for wheels (12) of a two-track motor vehicle, comprising a theoretical lower control arm plane which is formed by a transverse control arm (20) and a longitudinal control arm (48) and guides a wheel carrier (14), and comprising a torsion bar stabiliser (50), which is rotatable about a rotary axis running substantially in the vehicle transverse direction and is connected at its end region to the end region of the longitudinal control arm (48) remote from the wheel carrier (14) by means of a torque-transmitting connection, wherein the connection is established in that the torsion bar stabiliser (50) is supported with a lever-type support (52) on the longitudinal control arm (48),
**characterised in that** the lever-type support (52) on the longitudinal control arm (48) is designed with at least one ball joint (54, 56) having a ball socket (58).

2. An axle according to claim 1,
**characterised in that** the lever-type support (52) on the longitudinal control arm (48) is designed with two ball joints (54, 56), each having a ball socket (58), one of which is arranged on the longitudinal control arm (48) in a manner stationary relative thereto.

3. An axle according to claim 1 or 2,
**characterised in that** a ball (60) is mounted in the at least one ball socket (58) and is arranged on the torsion bar stabiliser (50) such that it is displaceable relative to said torsion bar stabiliser.

4. An axle according to claim 3,
**characterised in that** a slot-like opening (62) is formed in the ball socket (58), into which opening the ball (60) is inserted and is then held in a rotated manner.

5. An axle according to any one of claims 1 to 4,
**characterised in that** the longitudinal control arm (48) is designed with a pivot joint (40) so as to be mounted pivotably on an associated vehicle body.

6. An axle according to claim 5,
**characterised in that** the pivot joint (40) is designed with a damping body (44) surrounding the pivot axis (42) of said pivot joint.

7. An axle according to claim 6,
**characterised in that** the lever-type support (52) is designed with a lever portion (66) surrounding the damping body (44) at least in portions.

8. An axle according to claim 7,
**characterised in that** the lever portion (66) is designed in a substantially semi-circular manner as a portion of the torsion bar stabiliser (50).

9. An axle according to any one of claims 1 to 8,
**characterised in that** the torsion bar stabiliser (50) is mounted substantially centrally on an associated vehicle body by means of a support (68).

## Revendications

1. Essieu (46) pour des roues (12) d'un véhicule automobile à deux lignes de roues comprenant un plan de suspension inférieur virtuel guidant un porte-roues (14), qui est défini par un bras de suspension transversal (20) et un bras de suspension longitudinal (48), ainsi qu'une barre anti roulis (50) qui est mobile en rotation autour d'un axe de rotation s'étendant essentiellement dans la direction transversale du véhicule, et est reliée à son extrémité, par l'intermédiaire d'une liaison transmettant les couples de rotation avec l'extrémité du bras de suspension longitudinal (48) située à l'opposé du porte-roues (14), la liaison étant réalisée par support à levier (52) de la barre anti roulis (50) sur le bras de suspension longitudinal (48),
**caractérisé en ce que**
le support à levier (52) est réalisé sur le bras de suspension longitudinal (48) avec au moins une articulation sphérique (54, 56) comprenant une douille sphérique (58).

2. Essieu conforme à la revendication 1,
**caractérisé en ce que**
le support à levier (52) est réalisé sur le bras de suspension longitudinal (48) avec deux articulations sphériques (54, 56) comprenant chacune une douille sphérique (58) dont l'une est montée solidairement sur le bras de suspension longitudinal (48).

3. Essieu conforme à la revendication 1 ou 2,
**caractérisé en ce que**
dans la douille sphérique (58) est logée une rotule (60) qui est montée mobile en translation sur la barre anti roulis (50).

4. Essieu conforme à la revendication 3,
**caractérisé en ce que**
dans la douille sphérique (58) est formée une ouverture en forme de fente (62) dans laquelle la rotule (60) est introduite puis maintenue mobile en rotation.

5. Essieu conforme à l'une des revendications 1 à 4,
**caractérisé en ce que**
le bras de suspension longitudinal (48) est équipé d'une articulation pivotante (40) permettant son maintien mobile en pivotement sur une carrosserie de véhicule associée.

6. Essieu conforme à la revendication 5,
**caractérisé en ce que**
l'articulation pivotante (40) est équipée d'un corps d'amortissement (44) entourant son axe de pivotement (42).

7. Essieu conforme à la revendication 6,
**caractérisé en ce que**
le support à levier (52) est équipé d'un segment de levier (66) venant en prise au moins par segments autour du corps d'amortissement (44).

8. Essieu conforme à la revendication 7,
**caractérisé en ce que**
le segment de levier (66) est réalisé sous une forme essentiellement demi-circulaire en tant que segment de la barre anti roulis (50).

9. Essieu conforme à l'une des revendications 1 à 8,
**caractérisé en ce que**
la barre anti roulis (50) est montée essentiellement à sa partie médiane sur une carrosserie de véhicule associée avec un support (68).
